# FASCICULE DE BREVET EUROPEEN

(11) **EP 0 506 560 B1**
(45) Date de publication et mention de la délivrance du brevet: **21.05.1997**
(21) Numéro de dépôt: 92400822.0
(22) Date de dépôt: 26.03.1992
(51) Int. Cl.: G02B 27/00, G02B 5/32, G03H 1/02, G03H 1/04, B60J 1/00, G03H 1/18

(54) **Procédé de fabrication d'un hologramme intégré**
Herstellungsverfahren eines integrierten Holograms
Process of making an integrated hologram

(30) Priorité: 28.03.1991 DE 4110235
(43) Date de publication de la demande: 30.09.1992
(73) Titulaire: SAINT-GOBAIN VITRAGE, 92400 Courbevoie (FR); VEGLA Vereinigte Glaswerke GmbH, D-52066 Aachen (DE); Volkswagen Aktiengesellschaft, 38436 Wolfsburg (DE)
(72) Inventeur: Frost, Thorsten, Dr., W-4005 Meerbusch 1 (DE); Beeck, Manfred-Andreas, Dr., W-3170 Gifhorn (DE)
(74) Mandataire: Muller, René

(56) Documents cités:
- EP-A- 0 316 207
- EP-A- 0 415 230
- GB-A- 2 226 421
- US-A- 4 818 045
- PATENT ABSTRACTS OF JAPAN vol. 14, no. 409 (P-1101) & JP-A-21 57 888
- PATENT ABSTRACTS OF JAPAN vol. 9, no. 93 (P-351) & JP-A-59 220 774
- DATABASE WPI Derwent Publications Ltd., London, GB; AN 76-21639X [12] & JP-A-51 014 403
- PATENT ABSTRACTS OF JAPAN vol. 7, no. 38 (P-176) & JP-A-57 190 984

## Description

L'invention concerne un vitrage, en particulier un vitrage de pare-brise avec un hologramme dont les dimensions sont inférieures à celles du vitrage. Elle concerne par ailleurs plusieurs procédés de fabrication d'hologrammes destinés à de tels vitrages.

On connaît grâce à la demande de brevet européen EP O 216 692 un pare-brise avec un hologramme intégré. L'hologramme constitue par exemple un miroir holographique capable de réfléchir dans le champ de vision du conducteur des informations optiques produites ailleurs. Les informations peuvent éventuellement être stockées directement dans l'hologramme et apparaître au conducteur seulement lorsqu'elles sont éclairées avec une lumière d'une longueur d'onde précise. Les hologrammes sont constitués d'un film support et d'une couche traitée de manière à porter l'information holographique. Dans le cas de la demande européenne, la surface concernée est sensiblement inférieure à la surface du pare-brise puisque l'hologramme n'agit que dans le champ de vision principal du conducteur.

Il est connu par ailleurs d'intégrer à un pare-brise un hologramme agissant comme un miroir concave (DE 35 23 032) ou bien d'intégrer à une lunette arrière d'un véhicule automobile un hologramme qui fournisse l'image et qui remplisse la fonction d'un feu stop (EP 0 377 293).

Dans les nombreux cas où l'hologramme a une surface inférieure à celle du vitrage sa limite est constituée au moins partiellement par une ligne droite ou courbe située dans la surface du vitrage.

La demande de brevet européen EP 0 415 230 propose une méthode pour adoucir la ligne de démarcation entre la zone de l'hologramme et le reste du vitrage. Selon cette méthode, la couche-support de l'hologramme est masquée de manière à définir une trame constituée d'un grand nombre de zones ponctuelles photosensibles avec entre elles des zones ponctuelles désensibilisées. Dans un deuxième temps la couche est exposée pour engendrer l'hologramme seulement dans les zones photosensibles. Dans cette méthode on varie soit le nombre, soit la densité des zones ponctuelles désensibilisées de manière que la surface globale désensibilisée s'accroît lorsqu'on s'approche de la limite avec la zone de vision sans l'hologramme, soit par suite de l'augmentation des surfaces individuelles, soit par l'augmentation de leur nombre. On voit ainsi que selon cette méthode la transition à la limite de la zone est discontinue.

Quand un hologramme est intégré dans un vitrage de plus grande surface, quelle que soit la fonction qu'il remplit, les caractéristiques de transmission et de réflexion des surfaces où se trouve l'hologramme sont légèrement différentes de celles des domaines voisins du vitrage dans lequel il est intégré. En particulier lorsque les hologrammes sont adaptés à une lumière monocromatique ils possèdent en réflexion des couleurs qui dépendent de l'angle d'incidence. Ces couleurs sont complémentaires de celles de l'hologramme en transmission. Les impressions de couleurs différentes aussi bien en réflexion qu'en transmission entre la zone de l'hologramme et les zones voisines peuvent être gênantes.

Le document US 4 818 045 décrit plusieurs structures et plusieurs procédures pour exposer la périphérie d'un hologramme pour rendre ses limites moins visibles.

Ce résultat est obtenu dans tous les cas dans ce document grâce à la diffusion de lumière à la périphérie de l'hologramme. On réduit la cohérence de la lumière en plaçant des diffuseurs le long du bord de l'hologramme mais c'est une même quantité de lumière qui atteint toute la surface photographique.

La demande de brevet EP 316 207 décrit une technique pour modifier les caractéristiques de réflexion d'un miroir holographique transversalement et longitudinalement grâce à un système de modulation électro-optique qui varie l'intensité lumineuse d'un point à l'autre sur toute la surface de l'hologramme. Une méthode pour obtenir un dégradé est citée, elle utilise la transmission variable d'un filtre placé sur le faisceau laser.

Le document GB 2 226 421 décrit un hologramme associé à un pare-brise dans lequel la zone périphérique comprend des zones circulaires avec hologrammes séparées par des zones sans hologramme. On utilise pour réaliser ce domaine de transition un écran avec des zones transparentes et opaques correspondantes au travers duquel on fait l'illumination laser de la couche sensible.

L'invention se donne pour tâche de perfectionner un vitrage comportant un hologramme intégré de manière à ce que la transition entre celui-ci et le reste du vitrage se remarque le moins possible et qu'elle se fasse de manière harmonieuse.

Selon l'invention on a prévu dans la région de transition entre l'élément holographique et le reste du vitrage une zone où la couche holographique est continue et dans laquelle la réflexion diminue de manière continue suite à une modification correspondante de l'hologramme.

L'invention se fonde sur l'observation selon laquelle la région du pare-brise où se trouve l'hologramme est particulièrement visible du fait que la réflexion varie brutalement lorsqu'on franchit la ligne qui constitue la limite précise de l'hologramme. On constate à cet endroit une variation brusque du contraste. L'oeil se fixe sur cette limite qui le gêne. Selon l'invention cette ligne contrastée est remplacée par une zone de transition plus ou moins large. Les caractéristiques de réflexion et de transmission dans cette zone variant entre celles de l'hologramme d'une part et du reste du pare-brise de l'autre. Il découle de ce qui précède que dans ces conditions la présence de l'hologramme est beaucoup mieux tolérée.

Selon l'invention il est possible de prévoir un hologramme avec une structure tramée dans la zone de transition et de modifier les caractéristiques de transmission et de réflexion des zones ponctuelles de ce même hologramme.

Pour le réaliser, l'invention propose que l'hologramme de réflexion soit créé dans une couche de gélatine bichromatée sensible à l'humidité et que les propriétés de l'hologramme dans la zone de transition soient modifiées localement selon une trame par l'application déterminée d'humidité.

La technique préférée pour l'application déterminée d'humidité est l'emploi de la sérigraphie à l'aide d'un écran de soie tramé sur lequel on dépose une pâte aqueuse aux endroits déterminés.

Un vitrage de pare-brise selon l'invention et le procédé de fabrication de son hologramme sont expliqués dans ce qui suit à l'aide des figures.

Parmi les figures,
- la figure 1 montre une vue globale du pare-brise de l'invention,
- la figure 2 est un agrandissement d'une partie de la figure 1, elle correspond à la solution de l'art antérieur,
- la figure 3 présente un dispositif destiné à réaliser un hologramme,

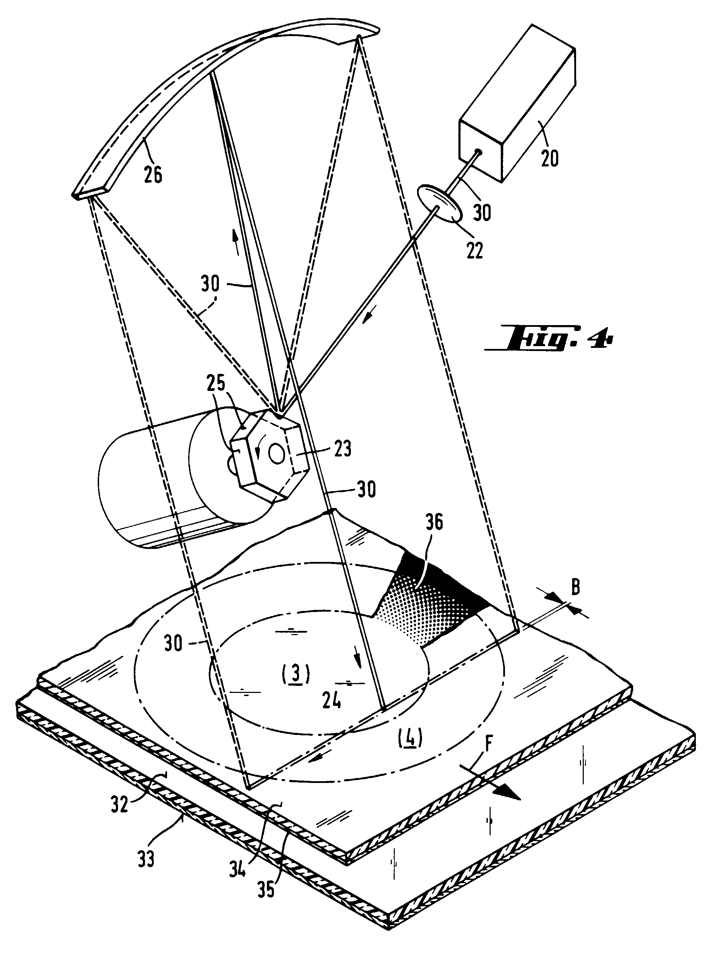

- la figure 4 présente un autre dispositif pour réaliser un autre type d'hologramme.

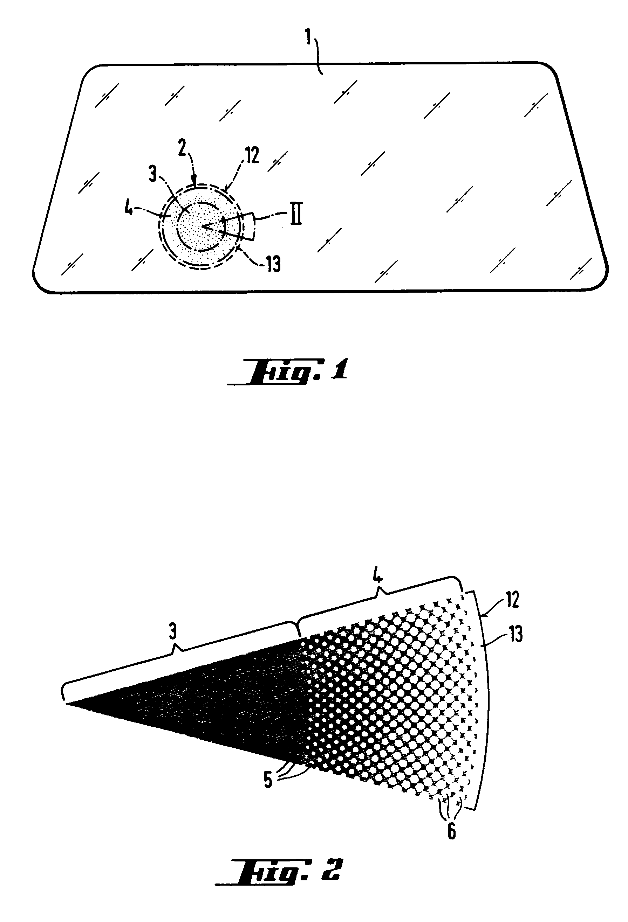

Le pare-brise 1 de la figure 1 est fait d'un verre feuilleté et l'élément holographique 2 a la forme d'une île circulaire entourée de toute part des zones de vision du vitrage. Le support de l'hologramme est intégré entre les deux verres du vitrage feuilleté. Il s'agit là d'un exemple de réalisation mais d'autres formes sont également possibles en particulier avec des éléments holographiques presqu'îles qui vont jusqu'au bord du vitrage.

La figure 1 présente le cas où l'hologramme joue le rôle d'un miroir semi-réfléchissant avec sélection de couleurs. Il est destiné à un système dit "tête haute" qu'on appelle également "combiner" qui permet de présenter des informations dans le champ de vision principale du conducteur. En comparaison avec les dimensions du pare-brise l'élément holographique 2 a une surface réduite.

Dans le domaine 3 qui possède la fonction d'un miroir semi-réfléchissant l'élément holographique est constitué d'une couche continue. Ce domaine 3 est entouré d'une zone de transition 4 où les phénomènes optiques sont progressifs.

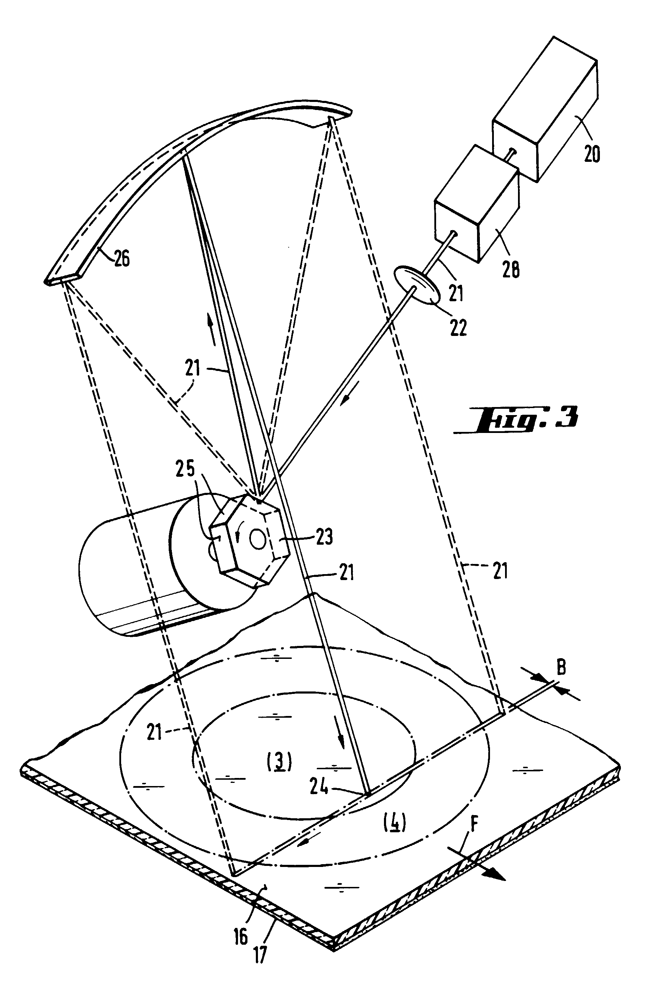

La figure 2 montre un exemple connu d'une telle zone de transition, ici, la zone de transition 4 est constituée d'un réseau de points et/ou de trous. Les suppressions ponctuelles 5, 6 de la couche holographique s'accroissent de l'intérieur vers l'extérieur. Tandis que la proportion des surfaces couverte par la couche holographique est de l'ordre de 90 à 95 % au niveau des trous intérieurs 5 elle n'est plus que de 10 à 5 % à l'autre extrémité de la zone de transition c'est-à-dire au niveau des points 6.

L'élément holographique 2 est constitué de manière connue d'un film-support transparent par exemple en polyester qui supporte une couche holographique fonctionnelle. Le film-support seul a sensiblement les mêmes caractéristiques de transmission et de réflexion que le reste du pare-brise. Ce n'est pas lui qui apparaît comme gênant. La limite 12 du film-support transparent 13 de l'élément holographique n'est pratiquement pas détectable dans le pare-brise.

Lors de la fabrication d'un élément holographique comme celui de la figure 2, dont la périphérie est tramée il s'agit simplement de détruire localement la couche holographique dans la zone concernée tandis qu'en dehors de la zone, du côté intérieur elle n'est pas modifiée. Il serait évidemment possible dans le cas où la trame est constituée de points, d'estamper le film holographique mais alors les manipulations d'un tel film lacunaire seraient très délicates.

Dans ce qui suit on présente divers exemples de procédé pour réaliser des éléments holographiques avec une zone de transition progressive soit du type déjà connu, soit de types nouveaux.

### Exemple 1

On réalise selon un procédé connu un hologramme destiné à agir comme un miroir en éclairant une couche d'environ 10 µm de gélatine sensibilisée au bichromate d'ammonium avec des faisceaux laser qui interfèrent. Le support du film de la couche de gélatine est un film de polyester à haute transparence d'environ 100 µm d'épaisseur.

On procède à l'effacement local de l'élément holographique dans la couche de gélatine selon la trame de points voulue. Du fait que les hologrammes à base de gélatine sont sensibles à l'humidité il est très facile d'utiliser l'eau pour procéder à l'effacement des points concernés. A la fin de l'opération il ne subsiste à ces emplacements que la couche de gélatine transparente.

Pour déposer l'humidité à l'endroit voulu on utilise avantageusement la sérigraphie. Il suffit de déposer sur l'écran de soie de la trame concernée une pâte humide et l'humidité se dépose sur l'hologramme de la couche de gélatine bichromatée. Immédiatement après que l'humidité ait diffusé dans la couche de gélatine c'est-à-dire après quelques,secondes, l'hologramme est détruit dans les zones concernées. Pour éviter que la diffusion de l'humidité continue on porte immédiatement l'élément holographique à une température d'environ 60°C et on le laisse environ deux heures à cette température. Il peut alors être intégré de manière connue dans le pare-brise.

### Exemple 2

Dans cet exemple on réalise directement un hologramme de réflexion avec une zone de transition tramée à sa périphérie au moment même de la réalisation de l'hologramme.

Pour cela on utilise le procédé décrit dans la demande de brevet européen EP 0 316 207. La figure 3 montre le dispositif qui permet la mise en oeuvre de cette technique. La couche sensible 17 est supportée par le film 16 et elle est éclairée en balayage au travers de son support grâce à un faisceau laser 21 tandis que le film 16 est déplacé dans la direction de la flèche F perpendiculairement à la trace lumineuse. Le balayage est obtenu de la manière suivante : le faisceau de lumière cohérente 21 émis par le laser 20 traverse un dispositif optique de focalisation 22 avant d'atteindre la surface réfléchissante de miroirs tournants supportés par un polyèdre en rotation 23. Les caractéristiques de l'optique 22 permettent d'ajuster la dimension du spot 24 c'est-à-dire la largeur B de la trace lumineuse agissant sur la couche sensible 17. L'axe de rotation du polyèdre réfléchissant 23 est disposé de telle sorte que la surface 25 qui réfléchit le faisceau laser 23 se trouve en permanence dans le plan focal du miroir cylindrique concave 26. La rotation du polyèdre 23 fait déplacer après réflexion le faisceau laser 21 périodiquement sur le miroir concave 26 puis, après nouvelle réflexion, sur la couche sensible 17 supportée par le film 16. On voit que de la sorte le faisceau laser 21 se déplace sur la largeur de la couche sensible 17 à une fréquence déterminée. Elle est en accord avec la vitesse de déplacement du film support 16 dans la direction de la flèche F.

Sur la trajectoire du faisceau 21 on a placé un modulateur électro-optique 28. Ce modulateur 28 est commandé par un ordinateur de telle sorte qu'il interrompt le faisceau selon un programme défini dans les zones périphériques de l'hologramme. On obtient ainsi un motif qui correspond à celui de la trame utilisée pour programmer l'ordinateur. La trame qui a été utilisée pour programmer l'ordinateur est une trame "positive" c'est-à-dire que les zones où la lumière est autorisée à passer sont les zones qui comportent l'hologramme.

Après fabrication de l'hologramme selon le procédé précédent on l'intègre de la manière habituelle dans le pare-brise.

### Exemple 3

Ici aussi de nouveau on réalise directement un hologramme de réflexion avec une zone de transition périphérique grâce au dispositif de la figure 3.

Le modulateur électro-optique 28 placé sur le trajet du faisceau laser 21 est de nouveau commandé par l'ordinateur. Il sert également à modifier l'éclairement de la zone de transition. Cependant il ne s'agit plus de créer une trame de points, les uns avec hologramme, les autres sans, mais au contraire de modifier de manière continue l'intensité du faisceau laser, à savoir de lui donner une intensité maximum le long de la zone centrale de l'hologramme et de l'éteindre à sa périphérie. On obtient de la sorte une zone de transition avec une couche holographique continue mais avec une réflexion décroissante.

Après fabrication, l'élément holographique est intégré de la manière habituelle dans le pare-brise.

### Exemple 4

Il s'agit ici aussi comme dans l'exemple 3 d'utiliser le balayage pour créer la zone de transition mais cette fois-ci c'est la vitesse de balayage à intensité constante qui est variée : dans la zone centrale de l'hologramme la vitesse est constante et faible, et dans la zone de transition elle croît depuis l'intérieur vers la périphérie. On utilise pour réaliser ce procédé le même dispositif d'exposition que sur la figure 3 à une exception près, il ne comporte pas de modulateur électrooptique 28. L'élément actif est un variateur de vitesse programmé qui agit sur la vitesse de rotation du polyèdre réfléchissant de manière à donner à la vitesse de balayage du faisceau sur le film support 16 en chaque point la valeur voulue.

### Exemple 5

On fabrique un élément holographique avec un hologramme en réflexion directement en même temps que sa zone de transition. Celle-ci possède simultanément une trame de points et une variation de performances optiques dans les éléments ponctuels. Pour mettre en oeuvre le procédé, on utilise de nouveau le dispositif de la figure 3. On met en oeuvre également le modulateur électrooptique 28 qui agit sur le faisceau laser 21. Le programme de l'ordinateur qui commande le modulateur 28 est tel que d'un côté il interrompt le faisceau laser pour reproduire la trame de points mais que par ailleurs il module l'intensité dans la zone de transition. Ainsi, l'hologramme possède dans la zone de transition un coefficient de réflexion décroissant et/ou une couleur en réflexion et en transmission qui évoluent de manière continue.

L'hologramme ainsi obtenu est intégré dans le pare-brise de manière classique.

### Exemple 6

On fabrique un hologramme en réflexion qui possède dans la zone de transition un coefficient de réflexion variable sans variation de longueur d'onde.

On réalise l'exposition de la couche de gélatine bichromatée conformément aux exemples 3 ou 4 c'est-à-dire que l'énergie de la lumière laser décroît du centre vers la périphérie de la zone de transition. A la fin de cette exposition on procède à une deuxième exposition de la couche bichromatée avec de la lumière ultraviolette incohérente. Cette exposition aux UV se déroule au travers d'un filtre qui cache complètement la partie centrale de l'hologramme et qui constitue un filtre "gris" progressif continu ou discontinu dans la zone intermédiaire. Sa transmission croît depuis le centre de la zone jusqu'à sa périphérie. Le filtre "gris" et le programme de modulation de lumière du laser sont conçus de telle sorte que l'énergie de chacune des sources d'éclairement, le laser d'une part, la lumière ultraviolette de l'autre, soit complémentaire en chaque point de la zone de transition.

Il est également possible de procéder de la manière inverse de celle que l'on vient de décrire c'est-à-dire d'exposer d'abord la couche sensible à la lumière ultraviolette incohérente puis dans un deuxième temps à celle du laser. Il faut simplement veiller à obtenir un éclairement uniforme grâce à la complémentarité des deux sources de lumière.

L'éclairement avec la lumière ultraviolette provoque une réticulation des molécules de gélatine. C'est pourquoi la couche de gélatine durcit de la même manière dans la zone de transition et dans la zone centrale illuminée, elle, par le laser seul. On évite ainsi que dans certains domaines la gélatine qui a moins durci gonfle d'avantage que dans les domaines où le durcissement a été complet. Un tel potentiel de durcissement différent conduit en effet à un changement de couleur. Grâce à la deuxième exposition d'UV qui compense la variation d'éclairement due à la lumière laser on évite la variation de couleur. L'hologramme ainsi obtenu est donc monochrome malgré une variation continue de la réflexion et de la transmission dans la zone de transition.

## Revendications

1. Procédé pour l'obtention d'un élément holographique destiné à équiper un vitrage en particulier un pare-brise de véhicule automobile, dont les dimensions sont inférieures à celles du vitrage et qui possède une zone de transition (4) à sa périphérie, dans lequel les propriétés de réflexion et de transmission de l'élément holographique dans la zone de transition (4) sont modifiées localement selon une trame **caractérisé en ce que** l'élément holographique est créé dans une couche de gélatine bichromatée sensible à l'humidité, l'application déterminée d'humidité provoquant lesdites modifications.

2. Procédé selon la revendication 1, **caractérisé en ce que** pour l'application déterminée d'humidité dans la zone de transition (4) on dépose par sérigraphie à l'aide d'un écran de soie tramé une pâte aqueuse aux endroits déterminés.

## Patentansprüche

1. Verfahren zur Herstellung eines holographischen Elements für eine Glasscheibe, insbesondere für eine KraftfahrzeugWindschutzscheibe, dessen Abmessungen kleiner sind als die Abmessungen der Glasscheibe und das am Rand eine Übergangszone (4) aufweist, in der die Reflexions- und Transmissionseigenschaften des holographischen Elements in der Übergangszone örtlich nach einer Rasterstruktur modifiziert werden, **dadurch gekennzeich net**, daß das holographische Element in einer feuchteempfindlichen Dichromat-Gelatine-Schicht erzeugt wird und durch gezielte Anwendung von Feuchtigkeit die genannten Modifikationen hervorgerufen werden.

2. Verfahren nach Anspruch 1, dadurch gekennzeichnet, daß zur gezielten Anwendung der Feuchtigkeit in der Übergangszone (4) eine wasserhaltige Druckpaste mit Hilfe des Siebdruckverfahrens an den gewünschten Stellen aufgebracht wird.

## Claims

1. Process for obtaining a holographic element for equipping a glazing and in particular a car windscreen, whose dimensions are smaller than those of the glazing and which has a transition zone (4) at its periphery, in which the reflection and transmission properties of the holographic element in the transition zone (4) are locally modified in accordance with a raster, characterized in that the holographic element is created in a moisture-sensitive, bichromated gelatin layer, the given moisture application giving rise to said modifications.

2. Process according to claim 1, characterized in that for the given moisture application to the transition zone (4), deposition takes place at the given locations of an aqueous paste by screen printing with the aid of a rastered silk screen.
